# EUROPEAN PATENT APPLICATION

(11) **EP 3 798 567 A1**
(43) Date of publication of application: **31.03.2021**
(21) Application number: 19200289.7
(22) Date of filing: 27.09.2019
(51) Int. Cl.: G01B 7/06, G01B 17/02, G01N 27/02, G01N 27/82, G01N 29/07, G01N 29/24

(54) **METHOD AND SYSTEM FOR DETERMINING PIPE THICKNESS**

(71) Applicant: Nov Downhole Eurasia Limited, Gloucestershire GL10 3RQ (GB)
(72) Inventor: The designation of the inventor has not yet been filed
(74) Representative: Docherty, Andrew John

(57) **Abstract**

A method for determining pipe thickness is provided. The method comprises collecting a first measurement signal from an ultrasonic system; collecting a second measurement signal from an electromagnetic induction (EMI) system; and determining the thickness of a pipe based on the first and second measurement signals.

## Description

### Field

Some described examples relate generally to measurements in the oil and gas industry, and in particular to methods and systems for determining pipe thickness.

### Background

In the oil and gas industry ultrasonic systems are commonly used to measure pipe wall thickness. Due to heavily corroded surfaces, ultrasonic systems are often not able to maintain their measurement signal. Furthermore, ultrasonic systems require a coupling medium to be applied to the pipe wall surface prior to measurement.

In contrast, wall thickness measuring systems in the oil and gas industry that use electromagnetic induction (EMI) technology are generally more cost-effective, robust and uncomplicated than ultrasonic systems. EMI systems do not require a coupling medium and are not susceptible to lost signals due to surface corrosion and/or provides an alternate means of measuring pipe thickness.

It is desirable to develop a system and method of measuring pipe thickness that mitigates or solves one or more of the problems identified above.

This background serves only to set a scene to allow the person skilled in the art to better appreciate the following description. Therefore, none of the above discussion should necessarily be taken as an acknowledgement that that discussion is part of the state of the art or is common general knowledge. One or more aspects/examples of the invention may or may not address one or more of the background issues.

### Summary

It should be appreciated that this Summary is provided to introduce a selection of concepts in a simplified form that are further described below in the Detailed Description. This Summary is not intended to be used to limit the scope of the claimed subject matter.

In some examples, there are provided methods and systems for determining pipe thickness. The provided methods and systems are more robust and/or accurate than existing methods and systems.

In one example, a method for determining pipe thickness is provided. The method is more robust and/or accurate than existing methods for determining pipe thickness.

In some examples, the method comprises collecting a first measurement signal from an ultrasonic system; collecting a second measurement signal from an electromagnetic induction (EMI) system; and determining the thickness of a pipe based on the first and second measurement signals.

Determining the thickness of the pipe based on the first and second measurement signals provides a more accurate measurement and robust measurement as the drawbacks of the ultrasonic and EMI systems are at least mitigated by utilizing measurement signals from both systems.

In some examples, determining the thickness of the pipe comprises combining the first and second measurement signals.

In some examples, determining the thickness of the pipe comprises assigning the first measurement signal to the second measurement signal.

If the first measurement signal cannot be collected by the ultrasonic system due to excess corrosion on the surface of the pipe, for example, pipe thickness may still be determined. Once the first measurement signal is assigned to the second measurement signal, the thickness of the pipe may be determined based on the second measurement signal collected by the EMI system.

In some examples, the first measurement signal is an absolute measurement signal.

In some examples, the second measurement system is a relative measurement signal.

Assigning the absolute measurement signal to the relative measurement signal allows the determination of the thickness of the pipe even when the ultrasonic system is not able to collect the relative measurement signal due to excess corrosion on the surface of the pipe, for example. The EMI system is still able to collect the relative measurement signal despite the excess corrosion, and the determination of pipe thickness may continue as the previously collected absolute measurement signal has been assigned to the relative measurement signal collected by the EMI system. This provides for a more robust method for measuring pipe thickness.

In some examples, obtaining the second measurement comprises detecting magnetic flux leakage from the pipe.

In some examples, obtaining the second measurement comprises magnetizing the pipe prior to detecting magnetic flux leakage from the pipe.

In some examples, the ultrasonic system is an electromagnetic acoustic transducer (EMAT) system.

An EMAT system is an ultrasonic system working without coupling. Sound is directly generated within the pipe wall using Lorentz and magneto resistive forces. Unlike an ultrasonic system, an EMAT system does not require a coupling medium. Furthermore, an EMAT system does not require pre-processing like an ultrasonic system.

In some examples, the EMI system is a magnetic flux leakage (MFL) system.

In some examples, the method further comprises calibrating the ultrasonic and EMI systems prior to collecting the first measurement signal.

In some examples, calibrating the EMI system comprises determining a thinnest thickness of a test pipe using the EMI system; and determining a thickest thickness of the test pipe using the EMI system.

In another example, a system for determining pipe thickness is provided. The system is more robust and/or accurate than existing systems for determining pipe thickness.

In some examples, the system comprises an ultrasonic system configured to generate a first measurement signal; an electromagnetic induction (EMI) system configured to generate a second measurement signal; and a processor configured to determine pipe thickness based on the first and second measurement signals.

Determining the thickness of the pipe based on the first and second measurement signals provides for a more accurate measurement and robust measurement as the drawbacks of the ultrasonic and EMI systems are at least mitigated by utilizing measurement signals from both systems.

In some examples, the processor is configured to combine the first and second measurement signals.

In some examples, the processor is configured to assign the first measurement signal to the second measurement signal.

If the first measurement signal cannot be generated by the ultrasonic system due to excess corrosion on the surface of the pipe, for example, pipe thickness may still be determined. Once the first measurement signal is assigned to the second measurement signal, the thickness of the pipe may be determined based on the second measurement signal generated by the EMI system.

In some examples, the first measurement signal is an absolute thickness of a pipe.

In some examples, the second measurement signal is a relative thickness of a pipe.

Assigning the absolute measurement signal to the relative measurement signal allows the determination of the thickness of the pipe even when the ultrasonic system is not able to generate the relative measurement signal due to excess corrosion on the surface of the pipe, for example. The EMI system is still able to generate the relative measurement signal despite the excess corrosion, and the determination of pipe thickness may continue as the previously generated absolute measurement signal has been assigned to the relative measurement signal generated by the EMI system. This provides for a more robust system for measuring pipe thickness.

In some examples, the ultrasonic system is an electromagnetic acoustic transducer (EMAT) system.

In some examples, the EMI system is a magnetic flux leakage (MFL) system.

In another example, a method for measuring pipe thickness is provided. The method is more robust and/or accurate than existing methods for determining pipe thickness.

In some examples, the method comprises assigning absolute measurement signals to relative measurement signals.

Assigning the absolute measurement signal to the relative measurement signal allows the determination of the thickness of the pipe even when the absolute measurement signals cannot be collected or generated due to excess corrosion on the surface of the pipe, for example. The relative measurement signal may still be collected or generated, and the pipe thickness may still be determined, as the previously collected or generated absolute measurement signal has already been assigned to the relative measurement signal. This provides for a more robust method for measuring pipe thickness.

In some examples, the absolute measurement signals are collected by an ultrasonic system.

In some examples, the ultrasonic system is an electromagnetic acoustic transducer (EMAT) system.

In some examples, the relative measurement signals are collected by an electromagnetic induction (EMI) system.

In some examples, the EMI system is a magnetic flux leakage (MFL) system.

In another example, a method for calibrating a system for determining pipe thickness is provided.

In some examples, the method comprises determining a thinnest thickness of a test pipe using an electromagnetic induction (EMI) system; determining a thickest thickness of the test pipe using the EMI system; and calibrating the EMI system using the thinnest and thickest thicknesses.

The above summary is intended to be merely exemplary and non-limiting.

### BRIEF DESCRIPTION OF THE DRAWINGS

Figure 1 is a block diagram of an ultrasonic system;
Figure 2 is a block diagram of an EMAT system;
Figure 3 is a front simplified elevation view of an EMI system;
Figure 4 is a side elevation view of a portion of the EMI system of Figure 3;
Figure 5 is a graph of the measurement signal of the EMI system of Figure 3;
Figure 6 is a graph of measurement signals of the EMI system of Figure 3;
Figure 7 is a front elevation view of a system for determining pipe thickness in accordance with an aspect of the disclosure;
Figure 8 is a front elevation view of a pipe for use with the system of Figure 7;
Figure 9 is a series of graphs of the measurements results of the system of Figure 7 aligned with a portion of a pipe;
Figure 10 is a front elevation view of a portion of a test pipe; and
Figure 11 is a graph of a measurement signal of the test pipe of Figure 10.

### DETAILED DESCRIPTION

The foregoing summary, as well as the following detailed description of certain example will be better understood when read in conjunction with the accompanying drawings. As will be appreciated, like reference characters are used to refer to like elements throughout the description and drawings. As used herein, an element or feature recited in the singular and preceded by the word "a" or "an" should be understood as not necessarily excluding a plural of the elements or features. Further, references to "one example" or "one embodiment" are not intended to be interpreted as excluding the existence of additional examples or embodiments that also incorporate the recited elements or features of that one example or one embodiment. Moreover, unless explicitly stated to the contrary, examples or embodiments "comprising", "having" or "including" an element or feature or a plurality of elements or features having a particular property might further include additional elements or features not having that particular property. Also, it will be appreciated that the terms "comprises", "has" and "includes" mean "including but not limited to" and the terms "comprising", "having" and "including" have equivalent meanings.

As used herein, the term "and/or" can include any and all combinations of one or more of the associated listed elements or features.

It will be understood that when an element or feature is referred to as being "on", "attached" to, "connected" to, "coupled" with, "contacting", etc. another element or feature, that element or feature can be directly on, attached to, connected to, coupled with or contacting the other element or feature or intervening elements may also be present. In contrast, when an element or feature is referred to as being, for example, "directly on", "directly attached" to, "directly connected" to, "directly coupled" with or "directly contacting" another element of feature, there are no intervening elements or features present.

It will be understood that spatially relative terms, such as "under", "below", "lower", "over", "above", "upper", "front", "back" and the like, may be used herein for ease of describing the relationship of an element or feature to another element or feature as depicted in the figures. The spatially relative terms can however, encompass different orientations in use or operation in addition to the orientation depicted in the figures.

Reference herein to "example" means that one or more feature, structure, element, component, characteristic and/or operational step described in connection with the example is included in at least one embodiment and or implementation of the subject matter according to the present description. Thus, the phrases "an example," "another example," and similar language throughout the present description may, but do not necessarily, refer to the same example. Further, the subject matter characterizing any one example may, but does not necessarily, include the subject matter characterizing any other example.

Reference herein to "configured" denotes an actual state of configuration that fundamentally ties the element or feature to the physical characteristics of the element or feature preceding the phrase "configured to".

Unless otherwise indicated, the terms "first," "second," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

As used herein, the terms "approximately" and "about" represent an amount close to the stated amount that still performs the desired function or achieves the desired result. For example, the terms "approximately" and "about" may refer to an amount that is within less than 10% of, within less than 5% of, within less than 1% of, within less than 0.1% of, or within less than 0.01% of the stated amount.

Some of the following examples have been described specifically in pipes for use in oil and gas production, or the like, but of course the examples may be used with pipes having other uses.

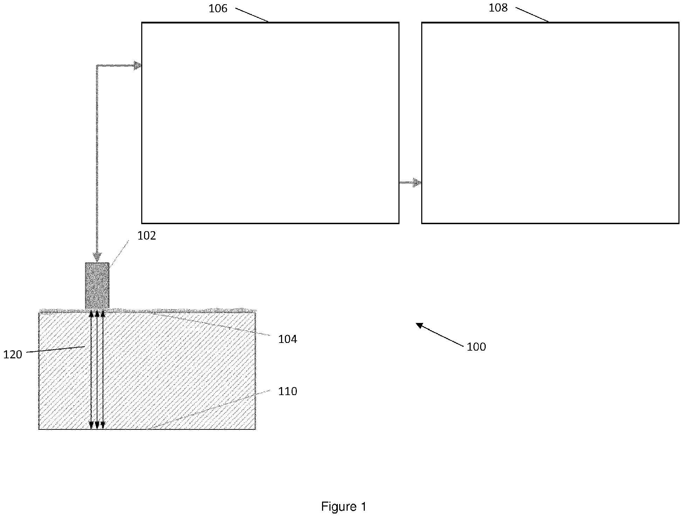

Turning now to Figure 1, a block diagram of an ultrasonic system 100 is shown. The ultrasonic system 100 is configured to determine pipe thickness. Specifically, the thickness of the wall of the pipe 110. The ultrasonic system 100 is configured to propagate ultrasonic waves or ultrasound into the pipe 110 to determine pipe thickness as will be described.

The ultrasonic system 100 may take the form of an ultrasonic thickness gauge. The ultrasonic system 100 may be a rotating system in order to determine pipe thickness across the circumference of the pipe 110. Alternately, the pipe 110 may rotate to determine pipe thickness across the circumference of the pipe 110.

The ultrasonic system 100 comprises an ultrasonic transducer 102, a coupling medium 104 or couplant, controller 106 and a processor 108. The ultrasonic transducer 102 is connected to the controller 106. The controller 106 is connected to the ultrasonic transducer 102. The controller 106 is connected to the processor 108. The processor 108 is connected to the controller 106.

The ultrasonic transducer 102 is configured to propagate ultrasonic waves into the object being tested, which, in this embodiment, is a pipe 110. The coupling medium 104 is applied to the outer surface of the pipe 110. Exemplary coupling medium 104 include water, propylene glycol and oil. The transducer 102 is separated from the surface of the pipe 110 by the coupling medium 104.

In this embodiment, the transducer 102 is a piezo-ceramic transducer. The transducer 102 is configured to send the ultrasonic waves 120 into the pipe 110, and receive or detect the reflected ultrasonic waves 120. The ultrasonic waves 120 may be pulsed waves.

Controller 106 is configured to control the functioning of the transducer 102. In this embodiment, controller 106 comprises a distributor switch connected to a high voltage generator. The generator is configured to generate a signal to the distributor switch to control the transducer 102. The distributor switch is configured to receive one or more signals from the transducer 102 for processing by the processor 108.

The processor 108 is connected via the controller 106 to the ultrasonic transducer 102. The processor 108 is configured to calculate the time between sent and received ultrasonic waves 120. The processor 108 is configured to process these times to determine pipe thickness. The processor 108 is configured to determine an absolute measurement result. In this embodiment, the absolute measurement result is the absolute pipe thickness which is the actual thickness of the pipe 110.

The processor 108 is configured to receive one or more signals from the controller 106 for processing. Specifically, the processor 108 is configured to receive one or more signals from the distributor switch. The processor 108 is configured to process the one or more signals and determine pipe thickness. In this embodiment, the processor 108 comprises an amplifier, one or more filters, analog-to-digital converter and a signal processor.

The amplifier is configured to amplify the signals from the transducer 102. The filters are configured to filter the amplify signals. The filters may be one or more high pass, band pass and low pass filters. The analog-to-digital converter is configured to convert the filtered signals from analog to digital. The signal processor is configured to process the converted signals to determine pipe thickness.

The ultrasonic system 100 may further comprise a display to display the determined pipe thickness. The display is connected to the processor 108. The display receives the determined pipe thickness from the processor 108. The display is configured to display the determined pipe thickness.

While a single transducer 102 has been described, the person skilled in the art will appreciate that other configurations are possible. In another embodiment, the ultrasonic system comprises a transducer or transmitter, and a receiver. The transducer is configured to send the ultrasonic waves into the device and the receiver is configured to detect the ultrasonic waves on the other side of the device. The transducer and receiver communicate the sent and received times, respectively, to the processor.

While the ultrasonic system 100 may be used to determine pipe thickness as described, the coupling medium 104 must be applied to the pipe prior to pipe thickness determination.

Furthermore, excess corrosion on the inner or outer surface of the pipe may result in lost signals during receipt or detection of reflected ultrasonic waves 120. Specifically, excess corrosion may result in the amplitude of the reflected ultrasonic waves 120 falling below a detection threshold. Thus, ultrasonic systems 100 require time for pre-processing (e.g. heating) and the application of a coupling medium 104, and are not robust.

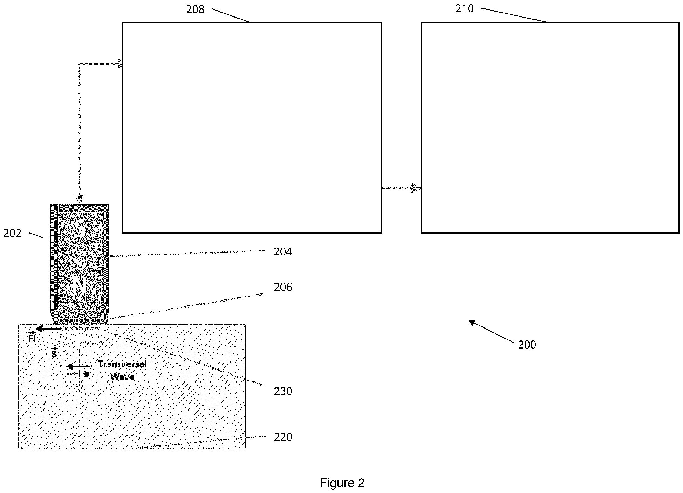

Turning now to Figure 2, a block diagram of an EMAT system 200 is shown. The EMAT system 200 is configured to determine pipe thickness. Specifically, the thickness of the wall of a pipe 220. Similar to the ultrasonic system 100, the EMAT system 200 is configured to propagate ultrasonic waves or ultrasound into the pipe 220 to determine pipe thickness as will be described. In contrast with the ultrasonic system 100, the EMAT system 200 does not require a coupling medium.

The EMAT system 200 may be a rotating system in order to determine pipe thickness across the circumference of the pipe 220. Alternately, the pipe may rotate to determine pipe thickness across the circumference of the pipe 220.

The EMAT system 200 comprises a transducer 202, a controller 208 and a processor 210. The transducer 202 is electrically connected to the controller 208. The controller 208 is electrically connected to the transducer 202. The controller 208 is electrically connected to the processor 210. The processor 210 is electrically connected to the controller 208.

The transducer 202 is configured to generate ultrasonic waves in the object being tested, which, in this embodiment, is a pipe 220. Similar to the ultrasonic system 100, the transducer 202 may be configured to transmit, and receive or detect ultrasonic waves.

The transducer 202 comprises a magnet 204 and an active element. In this embodiment, the active element is an electric coil 206. The magnet 204 and electric coil 206 are configured to generate magnetic fields that interact to generate ultrasonic waves in the pipe 220 as will be described.

The magnet 204 is configured to generate a bias field. The bias field is a static or quasi-static magnetic field. The magnet 204 may be a permanent or electromagnet.

The electric coil 206 is driven with an alternating current (AC) signal at an ultrasonic frequency. The ultrasonic frequency is in the range of 20 kHz to 10 MHz. The AC signal may be a continuous wave, a spike pulse or a tone-burst. The electric coil 206 is configured to generate an AC magnetic field. Ultrasonic waves are generated in the pipe 220 due to the interaction between the bias and AC magnetic fields. Ultrasonic waves are generated in the pipe 220 via magnetostriction when the pipe 220 is ferromagnetic. Furthermore, the electric coil is configured to generate eddy currents 230 on the surface of the pipe 220 and close to the surface, in the material of the pipe 220. The eddy currents 230 in the magnetic field experience Lorentz force when the pipe 220 is conductive.

Controller 208 is configured to control the functioning of the transducer 202. In this embodiment, controller 208 comprises a distributor switch. The distributor switch is configured to receive one or more signals from the transducer 202 for processing by the processor 210.

The processor 210 is configured to receive the time that the ultrasonic waves are sent into the pipe 220 and the time that the reflected ultrasonic waves are received or detected. The processor 210 is configured to process these times to determine pipe thickness. The processor 210 is configured to determine an absolute measurement result. In this embodiment, the absolute measurement result is the actual thickness of the pipe 220.

The processor 210 is configured to receive one or more signals from the controller 208 for processing. Specifically, the processor 210 is configured to receive one or more signals from the distributor switch. The processor 210 is configured to process the one or more signals and determine pipe thickness. In this embodiment, the processor 210 comprises an amplifier, one or more filters, analog-to-digital converter and a signal processor.

The amplifier is configured to amplify the signals from the transducer 202. The filters are configured to filter the amplify signals. The filters may be one or more high pass, band pass and low pass filters. The analog-to-digital converter is configured to convert the filtered signals from analog to digital. The signal processor is configured to process the converted signals to determine pipe thickness.

The EMAT system 200 may further comprise a display to display the determined pipe thickness. The display is connected to the processor 210. The display receives the determined pipe thickness from the processor 210. The display is configured to display the determined pipe thickness.

As previously stated, unlike the ultrasonic system 100, the EMAT system 200 does not require a coupling medium. However, similar to the ultrasonic system 100, in the EMAT system 200 excess corrosion on the inner or outer surface of the pipe 220 may result in lost signals during receipt or detection of reflected ultrasonic waves. Specifically, excess corrosion may result in the amplitude of the reflected ultrasonic waves falling below a detection threshold. Thus, EMAT systems are not robust.

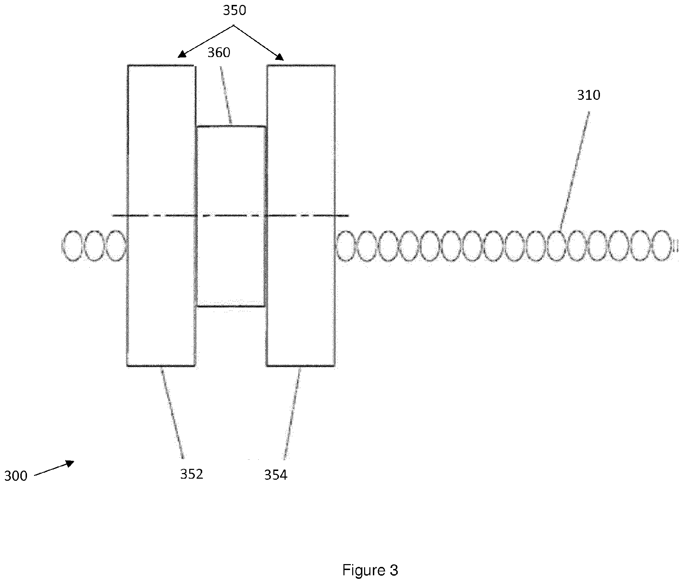

Turning now to Figure 3, a simplified front elevation view of an EMI system is shown. The EMI system is configured to determine pipe thickness. Specifically, the EMI system is configured to generate a magnetic field that saturates the pipe. If the thickness of the pipe changes, the magnetic field strength at the pipe surface changes. However, in contrast with ultrasonic and EMAT systems, the EMI system collects or generates a relative measurement, not an absolute measurement.

In this embodiment, the EMI system is a magnetic flux leakage (MFL) system 300. The MFL system 300 comprises a conveyor 310, a coil arrangement, a sensor and a processor.

The conveyor 310 is configured to convey the pipe through the coil arrangement.

The coil arrangement is configured to generate a magnetic field to magnetize the pipe. The magnetic field is nearly uniform, or at least generally uniform at the region of desired inspection. In this embodiment, the coil arrangement comprises a Helmholtz coil 350. The Helmholtz coil 350 comprises a first magnetic coil 352 and a second magnetic coil 354. The coils 352 and 354 are identical. The coils 352 and 354 are circular and generally ring shaped. The coils 352 and 354 are parallel along the longitudinal axis of the conveyor 310. The coils 352 and 354 are separated by a distance approximately equal to the radius of the coils 352 and 354. Each of the first and second magnetic coils 352 and 354, respectively, have a central aperture through which the conveyor 310 passes. The apertures are sized such that the conveyor 310 conveys a pipe without damaging the Helmholtz coil 350.

While a particular coil arrangement has been described, one of skill in the art will appreciate that other configurations are possible. In another embodiment, the coil arrangement comprises a single coil configured to generate a nearly uniform magnetic field.

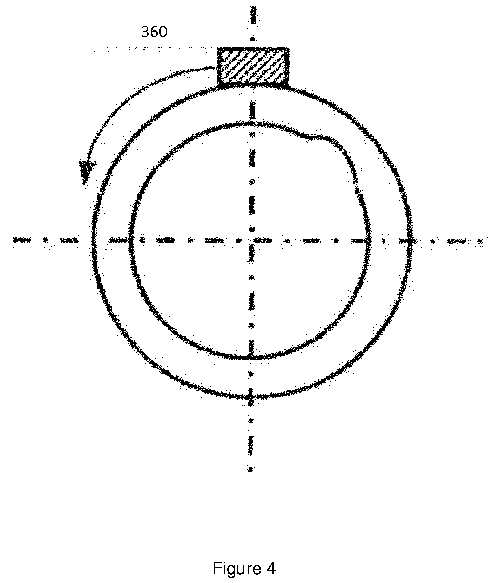

The sensor is configured to detect magnetic flux leakage from the pipe. In this embodiment, the sensor is a Hall Effect sensor 360. As shown in Figure 4, the Hall Effect sensor 360 is configured to rotate around the pipe to detect magnetic flux leakage across the circumference of the pipe. Alternately, the pipe is configured to rotate to detect magnetic flux leakage across the circumference of the pipe.

The processor is configured to determine pipe thickness. The processor is electrically connected to the Hall Effect sensor 360. The processor is configured to receive the detected magnetic flux leakage from the Hall Effect sensor 360, process the detected magnetic flux leakage and determine pipe thickness. The processor is configured to determine a relative measurement result.

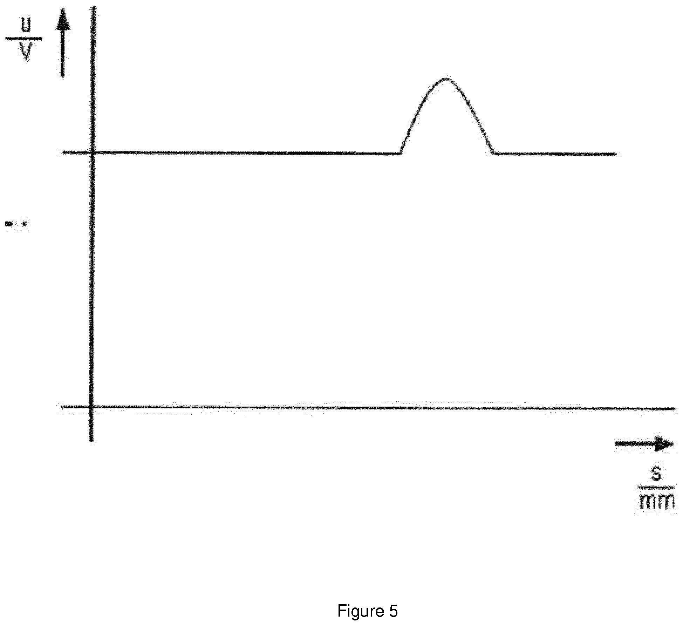

Turning now to Figure 5, a graph of the results of the processor determining pipe thickness based on the detection of the Hall Effect sensor 360 is shown. The area of increased thickness shown in Figure 4 is clearly visible in the graph of Figure 5 as an increase in the relationship or ratio between signal voltage and thickness of the pipe.

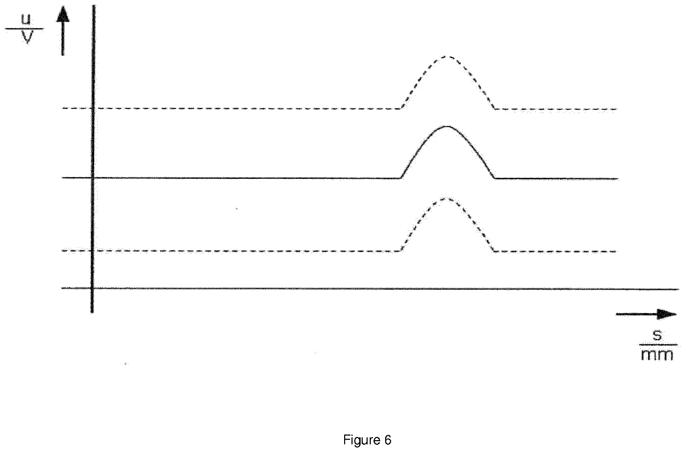

As shown in Figures 5 and 6, the relative measurement result is a relationship or ratio between signal voltage and the thickness of the pipe. The relative measurement result is not an absolute value. As shown in Figure 6, changing a magnetization current of the coils 352 and 354, alters the position of the relative measurement result, specifically, the signal voltage changes.

In contrast with the ultrasonic and EMAT systems, an EMI and MFL systems are less likely to suffer from suffer signal loss due to excess corrosion of the pipe. However, EMI and MFL systems produce a relative measurement result, rather than an absolute measurement result.

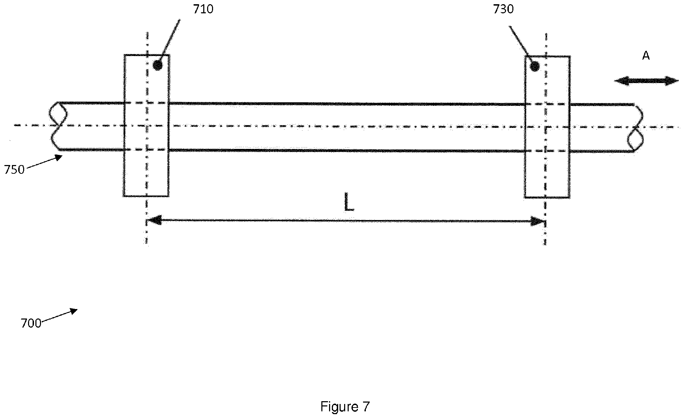

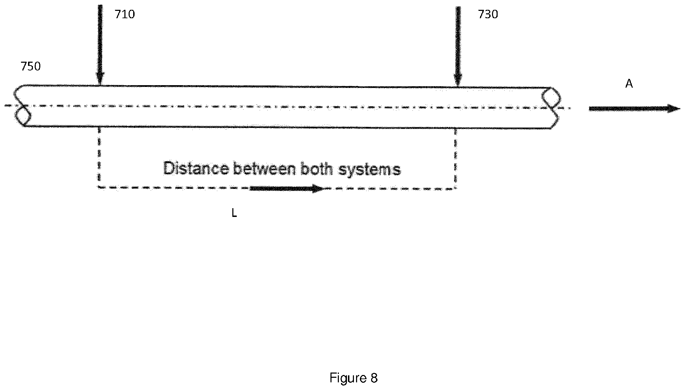

Turning now to Figures 7 and 8, a system for determining pipe thickness generally identified by reference numeral 700 is shown. The system 700 comprises an EMAT system 710 and an EMI system. In this embodiment, the EMI system is an MFL system 730. The EMAT system 710 comprises the same elements and functions in the same manner as the previously described EMAT system. The MFL system 730 comprises the same elements and functions in the same manner as the previously described MFL system.

The EMAT system 710 is configured to generate or collect a first measurement signal. As previously described, in this embodiment, the first measurement signal is an absolute measurement result. The absolute measurement result may be an absolute measurement signal generated or collected by the EMAT system 710. The absolute measurement signal is the absolute pipe thickness.

The MFL system 730 is configured to generate or collect a second measurement signal. As previously described, in this embodiment, the second measurement signal is a relative measurement result. The relative measurement result may be a relative measurement signal generated or collected by the MFL system 730. As shown in Figures 5 and 6, the relative measurement signal is the relative pipe thickness.

The EMAT system 710 and the MFL system 730 are separated by a longitudinal distance of L.

The system 700 further describes a processor (not shown). The processor is configured to determine pipe thickness based on the first and second measurement signals which, in this embodiment, are the absolute and relative measurement signals, respectively. In this embodiment, the processor is configured to combine the first and second measurement signals. Specifically, the processor is configured to assign the first measurement signal to the second measurement signal. In this embodiment, the processor is configured to assign the absolute measurement signal generated or collected by the EMAT system 710 to the relative measurement signal generated or collected by the MFL system 730.

Determining the thickness of the pipe based on the first and second measurement signals provides for a more accurate and/or robust measurement as the previously described drawbacks of the EMAT system 710 and MFL system 730 are at least mitigated by utilizing measurement signals from both systems.

As will be described, if the first measurement signal cannot be collected by the EMAT system 710 due to excess corrosion on the surface of a pipe 750, pipe thickness may still be determined. Once the first measurement signal is assigned to the second measurement signal, the thickness of the pipe 750 may still be determined by the processor based on the second measurement signal collected by the MFL system 730.

The pipe 750 may be a pipe used or for use in the oil and gas industry. Specifically, the pipe 750 may be manufactured of ferromagnetic steel.

The system 700 may further comprise a conveyor or other means for moving the pipe.

In operation, the pipe 750 moves in direction A from the EMAT system 710 to the MFL system 730. The person skilled in the art will appreciate that the orientation of the system 710 and 730 may be reversed relative to the pipe 750. The pipe 750 has a length greater than the distance L. The pipe 750 may move from the EMAT system 710 to the MFL system 730 via the previously described conveyor or any other means of conveying the pipe 750. The pipe 750 may be rotated such that the thickness of the entire circumference of the pipe 750 may be determined. Alternatively, the EMAT system 710 and the MFL system 730 may be rotated in unison such that the entire circumference of the pipe 750 may be determined.

The EMAT 710 determines the absolute thickness of the pipe 750 as previously described. The MFL system 730 determines the relative thickness of the pipe 750. As previously described, the relative values from the MFL system 730 are a relationship or ratio between signal voltage and the thickness of the pipe 750. The relative values are not absolute pipe thickness values.

The processor assigns absolute values from the EMAT 710 to the relative values from the MFL system 730. The relative values from the MFL system 730 track the absolute values of the EMAT system 710 based on the separation distance L between the systems.

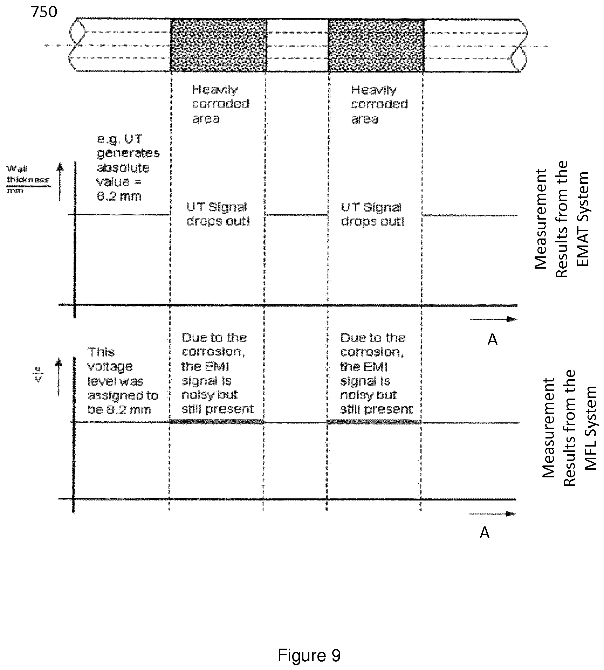

If the absolute values from the EMAT 710 are lost or drop out due to, for example, excess pipe corrosion, the system 700 may still continue to determine pipe thickness with only the relative values from the MFL system 730 as the relative values from the MFL system 730 have already been assigned the absolute from the EMAT system 710. This is highlighted in Figure 9.

Figure 9 is a series of graphs of the measurements results of the system 700 aligned with a portion of the pipe 750. The graph directly under the portion of the pipe 750 illustrates the measurement results from the EMAT system 710. As shown in this graph, the EMAT system 710 generates or collects an absolute measurement result of 8.2 mm. This result is assigned to the relative measurement result of the MFL system 730 by the processor. The absolute measurement signal from the EMAT system 710 may drop out or becomes lost due to, for example, excess or heavy corrosion on the pipe 750.

The next graph in Figure 9 illustrates the measurement results from the MFL system 730. As shown in this graph, the relative measurement signal generated or collected by the MFL system 730 is assigned the absolute value 8.2 mm collected or generated by the EMAT system 710. When the absolute measurement signal from the EMAT system 710 drops out or is lost due to, for example, excess or heavy corrosion on the pipe 750, the MFL system 730 continues to detect or collect the relative measurement result. The relative measurement result may be more noisy due to the excess or heavy corrosion; however, the relative measurement signal is still present. Furthermore, as the absolute measurement signal has been assigned the relative measurement signal, the relative measurement signal collected or generated by the MFL system 730 will still provide an absolute value of 8.2 mm as the thickness of the pipe 750.

While assigning the absolute measurement signal to the relative measurement signal by the processor has been described, the system 700 may be calibrated using a test pipe. In this embodiment, the system 700 is calibrated prior to the EMAT system 710 and MFL system 730 collecting or generating the first and second measurement signals, respectively.

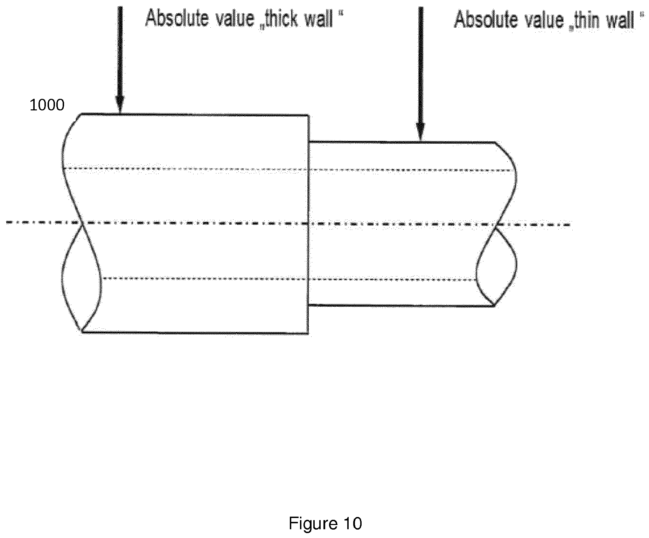

Turning now to Figure 10, a test pipe 1000 is shown. The test pipe 1000 has the least thickest pipe walls (i.e. the thinnest pipe thickness) and the most thick pipe walls (i.e. the thickest pipe thickness). The system 700 is calibrated by assigning the voltage associated with the known thinnest thickness of the test pipe 1000 to the EMI or MFL system 730 and voltage associated with the known thickest thickness of the test pipe 1000 to the EMI or MFL system 730.

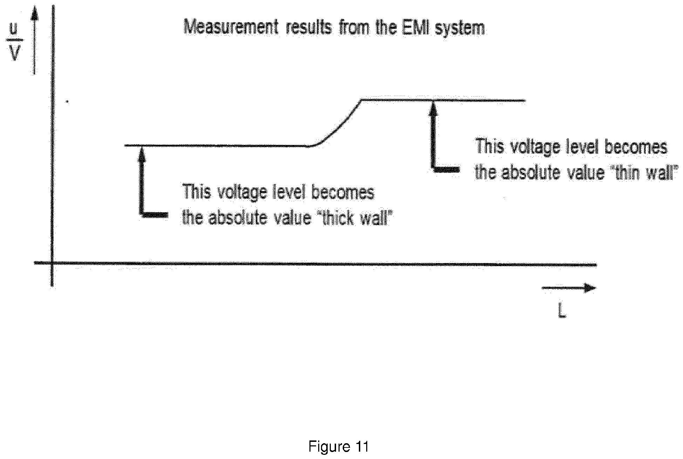

As shown in Figure 11, the voltage level associated with the thinnest thickness of the test pipe 1000 is assigned the absolute value of a thin wall and the voltage level associated with the thickest thickness of the test pipe 1000 is assigned the absolute value of a thick wall. The voltage levels of the thin and thick walls are assigned to the relative minimum and maximum, respectively, of the EMI or MFL system 730.

While a particular configuration of the system 700 for determining pipe thickness has been described, the person skilled in the art will appreciate that variations are possible. In another embodiment, the system 700 comprises an ultrasonic system instead of an EMAT system 710. As previously described, unlike an EMAT system, an ultrasonic system requires a coupling agent.

In another embodiment, the EMI system of the system 700 is not a MFL system, but instead a general EMI system. The EMI system is configured to magnetize the pipe 750 with a constant direct current (DC) magnetic field. The EMI system is supplied with a constant current supply. The EMI system comprises a Hall Effect sensor that is configured to rotate around the pipe and detect magnetic field leakage from the pipe 750 to determine a relative measurement signal indicating thinner areas of the pipe 750. As previously described, the relative measurement signal is not an absolute thickness measurement of the pipe 750. The relative measurement signal is unitless, but is instead a relative result positioned freely in the number space.

While the system 700 has been described as being used on pipes in the oil and gas industry, a person skilled in the art will appreciate that the thickness of other pipes or tubulars may be similarly determined.

Each individual feature described herein is disclosed in isolation and any combination of two or more such features, to the extent that such features or combinations are capable of being carried out based on the present description as a whole in the light of the common general knowledge of a person skilled in the art, irrespective of whether such features or combinations of features solve any problems disclosed herein, and without limitation to the scope of the claims. Aspects of the description may consist of any such individual feature or combination of features. In view of the foregoing description it will be evident to a person skilled in the art that various modifications may be made within the scope of the description.

## Claims

1. A method for determining pipe thickness, the method comprising:
collecting a first measurement signal from an ultrasonic system;
collecting a second measurement signal from an electromagnetic induction (EMI) system; and
determining the thickness of a pipe based on the first and second measurement signals.

2. The method of claim 1, wherein determining the thickness of the pipe comprises combining the first and second measurement signals.

3. The method of claim 1 or 2, wherein determining the thickness of the pipe comprises assigning the first measurement signal to the second measurement signal.

4. The method of any one of claims 1 to 3, wherein the first measurement signal is an absolute measurement signal, and/or wherein the second measurement signal is a relative measurement signal.

5. The method of any one of claims 1 to 4, wherein obtaining the second measurement comprises:
detecting magnetic flux leakage from the pipe, and, optionally,
magnetizing the pipe prior to detecting magnetic flux leakage from the pipe.

6. The method of any one of claims 1 to 5, wherein the ultrasonic system is an electromagnetic acoustic transducer (EMAT) system, and/or wherein the EMI system is a magnetic flux leakage (MFL) system.

7. The method of any one of claims 1 to 6, further comprising:
calibrating the ultrasonic system and/or EMI system prior to collecting the first measurement signal, wherein calibrating the EMI system optionally comprises:
determining a thinnest thickness of a test pipe using the EMI system; and
determining a thickest thickness of the test pipe using the EMI system.

8. A system for determining pipe thickness, the system comprising:
an ultrasonic system configured to generate a first measurement signal;
an electromagnetic induction (EMI) system configured to generate a second measurement signal; and
a processor configured to determine pipe thickness based on the first and second measurement signals.

9. The system of claim 8, wherein the processor is configured to combine the first and second measurement signals.

10. The system of claim 8 or 9, wherein the processor is configured to assign the first measurement signal to the second measurement signal.

11. The system of any one of claims 8 to 10, wherein the first measurement signal is an absolute thickness of a pipe, and/or wherein the second measurement signal is a relative thickness of a pipe.

12. The system of any one of claims 8 to 11, wherein the ultrasonic system is an electromagnetic acoustic transducer (EMAT) system, and/or wherein the EMI system is a magnetic flux leakage (MFL) system.

13. A method for measuring pipe thickness comprising assigning absolute measurement signals to relative measurement signals.

14. The method of claim 13, wherein the absolute measurement signals are collected by an ultrasonic system, and, optionally, wherein the ultrasonic system is an electromagnetic acoustic transducer (EMAT) system, and/or
wherein the relative measurement signals are collected by an electromagnetic induction (EMI) system, and, optionally, wherein the EMI system is a magnetic flux leakage (MFL) system.

15. A method for calibrating a system for determining pipe thickness, the method comprising:
determining a thinnest thickness of a test pipe using an electromagnetic induction (EMI) system;
determining a thickest thickness of the test pipe using the EMI system; and
calibrating the EMI system using the thinnest and thickest thicknesses.
